# EUROPEAN PATENT APPLICATION

(11) **EP 4 682 098 A1**
(43) Date of publication of application: **21.01.2026**
(21) Application number: 24382765.6
(22) Date of filing: 15.07.2024
(51) Int. Cl.: B66D 5/14, B66D 5/30, B66B 11/04, F16D 65/12

(54) **ELEVATOR BRAKE DISC ASSEMBLY**

(71) Applicant: Otis Elevator Company, Farmington, Connecticut 06032 (US)
(72) Inventor: Illan, Juan Antonio, 28918 Leganes, Madrid (ES); Hubbard, James, Farmington, 06032 (US)
(74) Representative: Schmitt-Nilson Schraud Waibel Wohlfrom Patentanwälte Partnerschaft mbB

(57) **Abstract**

An elevator brake disc assembly (30) for braking rotation of a shaft (12) within an elevator brake (20), the shaft (12) extending in an axial direction (A) and being rotatable around an axis of rotation, comprises: a brake disc (33) mounted to the shaft (12) for rotating concurrently with the shaft (12); at least one first brake portion (35) firmly fitted to the brake disc (33); and at least one second brake portion (37) attached to the brake disc (33) in a configuration in which the at least one second brake portion (37) rotates concurrently with the brake disc (33) and in which it is movable with respect to the brake disc (33) along the axial direction (A).

## Description

The invention relates to an elevator brake disc assembly. The invention further relates to an elevator brake, to an elevator drive system and to an elevator system comprising at least one elevator brake disc assembly, respectively. The invention also relates to a method of braking a shaft in an elevator system with an elevator brake.

An elevator system typically comprises at least one elevator car configured for moving along a hoistway extending between a plurality of landings, and a drive system configured for driving the elevator car.

The drive system comprises at least one motor for moving the elevator car along the hoistway, and at least one elevator brake for braking the movement of the elevator car.

The at least one elevator brake may comprise a brake disc and at least one plunger, which is movable into frictional engagement with the brake disc for braking and stopping any rotation of the brake disc. In order to enhance the safety of the elevator system, an elevator brake typically comprises at least two plungers, which are movable independently of each other. Elevator safety codes typically require that an elevator brake comprises at least two plungers that are movable independently of each other.

If the elevator brake is released, but, in particular due to a malfunction, one of the plungers does not move back into its released position, the defective plunger may remain in frictional engagement with the brake disc, continuously urging the brake disc against a stationary braking element provided next to the brake disc assembly on a side opposite to the plungers.

Even if the brake disc is provided with two separate brake portions, one brake portion for each of the plungers, respectively, continuously urging the brake disc against the stationary braking element by at least one of the plungers will result in both brake portions being in frictional engagement with the stationary braking element, causing both portions to be damaged or worn down.

In consequence, the performance of the whole elevator brake may be at risk. Further, brake linings applied to both brake portions need to be replaced.

It would therefore be beneficial to provide an improved elevator brake disc assembly for an elevator brake that prevents the braking action of both plungers from deteriorating due to a malfunction of one of the plungers.

According to an exemplary embodiment of the invention, an elevator brake disc assembly for braking rotation of a shaft within an elevator brake, wherein the shaft extends in an axial direction and is rotatable around an axis of rotation, comprises: a brake disc mounted to the shaft for rotating concurrently with the shaft; at least one first brake portion firmly fitted to or formed integrally with the brake disc so that it rotates concurrently with the brake disc; and at least one second brake portion attached to the brake disc in a configuration in which the at least one second brake portion rotates concurrently with the brake disc and is movable with respect to the brake disc along the axial direction.

Exemplary embodiments of the invention further include an elevator brake for braking rotation of a shaft of an elevator drive system, wherein the elevator brake comprises: at least one elevator brake disc assembly according to an exemplary embodiment of the invention, with the elevator brake disc of the at least one elevator brake disc assembly being mounted to the shaft for rotating concurrently with the shaft; at least one stationary braking element configured for not rotating concurrently with the shaft; at least one first plunger that is movable along the axial direction for frictionally engaging with the first brake portion of the brake disc of the at least one elevator brake disc assembly for urging the brake disc towards the stationary braking element into an engaged position of the elevator brake; and at least one second plunger that is movable along the axial direction for frictionally engaging with the second brake portion of the brake disc of the at least one elevator brake disc assembly for urging the brake disc towards the stationary braking element into an engaged position of the elevator brake.

Exemplary embodiments of the invention also include an elevator drive system comprising a rotating shaft, a motor configured for rotating the rotating shaft, and an elevator brake according to an exemplary embodiment of the invention that is configured for braking and stopping rotation of the rotating shaft.

Exemplary embodiments of the invention further include an elevator system comprising an elevator car that is movable in a hoistway between a plurality of landings, and an elevator drive system according to an exemplary embodiment of the invention that is configured for moving the elevator car along the hoistway.

Exemplary embodiments of the invention also include a method of braking a shaft in an elevator system with an elevator brake according to an exemplary embodiment of the invention, wherein the method includes urging the first plunger against the first brake portion of the brake disc of the at least one elevator brake disc assembly for urging the brake disc towards the stationary braking element into an engaged position of the elevator brake; and/or urging the second plunger against the second brake portion of the brake disc of the at least one elevator brake disc assembly for urging the brake disc towards the stationary braking element into an engaged position of the elevator brake.

The method may in particular include concurrently urging the first and second plungers against the first and second brake portions of the brake disc for urging the brake disc towards the stationary braking element into an engaged position of the elevator brake.

In an elevator brake disc assembly according to an exemplary embodiment of the invention, the at least one second brake portion is capable of floating with respect to the brake disc and the at least one first brake portion along the axial direction.

In case of a malfunction of one of the plungers causing the respective plunger not to move completely back into its released position, i.e. into a position in which it does not engage with the corresponding brake portion, the capability of the at least second brake portion to float with respect to the first portion allows the at least one of the at least two brake portions that is not associated with the defective plunger to float freely in the axial direction. It in particular allows the at least one of the at least two brake portions to move out of engagement with the stationary braking element and the non-defective plunger.

In consequence, only the at least one brake portion that is associated with the defective plunger remains in engagement with the defective plunger and/or with the stationary braking element. As a result, only the at least one brake portion associated with the defective plunger may be damaged or worn down due to the rotation of the brake disc with respect to the defective plunger and with respect to the stationary braking element. The at least one other brake portion not associated with the defective plunger is not affected by the malfunction of the defective plunger and does not need to be replaced. As a result, the risk that both brake portions are damaged or destroyed in case one of the plungers fails, is considerably reduced.

In the following, a number of optional features of an elevator brake disc assembly and of an elevator brake according to exemplary embodiments of the invention are set out. These features may be realized in particular embodiments, alone or in combination with any of the other features, unless explicitly stated otherwise.

A first brake lining may be applied to the first brake portion on a first side of the brake disc, and a second brake lining may be applied to the first brake portion on an opposing second side of the brake disc. Similarly, a first brake lining may be applied to the second brake portion on a first side of the brake disc, and a second brake lining may be applied to the second brake portion on an opposing second side of the brake disc.

Providing the brake portions with two brake linings, wherein each brake lining is arranged on one side of the brake disc, respectively, allows employing both sides of the brake disc for frictional engagement in order to brake rotation of the brake disc. The first brake lining(s) may, for example, be configured for frictionally engaging with a plunger, and the second brake lining(s) may be configured for frictionally engaging with a stationary braking element.

Brake linings may also be applied to engagement portions of the first and second plungers facing the brake disc and/or to engagement portions of the stationary braking element facing the brake disc.

The first brake portion may be provided as at least one first brake portion ring and the second brake portion may be provided as at least one second brake portion ring. The at least one first brake portion ring and the at least one second brake portion ring may be arranged coaxially with respect to each other, with the shaft extending through the common center of the at least one first brake portion ring and the at least one second brake portion ring. When viewed along a radial direction, which is oriented perpendicularly to the axial direction, the at least one first brake portion ring may be arranged outside the at least one second brake portion ring.

Such a configuration of the first and second brake portions allows the engagement portions of the two plungers, which may be arranged at different positions along the radial direction, i.e. in different distances from the center of the elevator brake disc assembly, to frictionally engage with the first and second brake portions of the brake disc independently of each other, in particular without interfering with each other.

The elevator brake disc assembly may comprise a carrier providing or supporting the at least one second brake portion. The at least one second brake portion may be provided or supported by the carrier in a configuration in which it is movable along the axial direction with respect to the brake disc. Such a carrier allows providing or supporting the second brake portion on the brake disc in a floating configuration in which it is movable along the longitudinal direction with respect to the brake disc.

The carrier may comprise a first support plate arranged on a first side of the brake disc and providing or supporting a first part of the second brake portion; a second support plate arranged on an opposite second side of the brake disc and providing or supporting a second part of the second brake portion. The carrier may further comprise a plurality of connectors extending through a plurality of openings formed within the brake disc and coupling the first support plate and second support plate with each other.

Such a configuration may provide a mechanically stable carrier that is securely but movably attached to the brake disc by the plurality of connectors extending through the brake disc.

The openings and the connectors may be arranged around the axial direction. The openings and the connectors may in particular be arranged along a circle with the shaft extending through the center of the circle. Arranging the connectors on a circle results in a rotational symmetric configuration of the elevator brake disc assembly. A rotational symmetric configuration of the elevator brake disc assembly does not add considerable imbalance to the rotating elements of the elevator brake disc assembly.

In an elevator brake disc assembly according to an exemplary embodiment of the invention, the brake disc may comprise a first brake disc portion providing or supporting the first brake portion and a second brake disc portion providing or supporting the second brake portion, wherein the first brake disc portion and the second brake disc portion are movable with respect to each other along the axial direction.

The first brake disc portion may in particular be provided as a first brake disc portion ring and the second brake disc portion is provided as a second brake disc portion ring. The first and second brake disc portion rings may be arranged coaxially with respect to each other, with the first brake disc portion ring surrounding the second brake disc portion ring.

In such an embodiment, no carrier is needed for providing or supporting one of the portions in a configuration in which it is capable to float along the axial direction. This may reduce the complexity of and the costs for producing an elevator brake disc assembly according to an exemplary embodiment of the invention.

In order to allow the first brake disc portion to float with respect to the second brake disc portion, the first brake disc portion may be coupled to the second brake disc portion by a spline formed between the first and second brake disc portions.

The spline may comprise a plurality of notches formed along an inner periphery of the first brake disc portion and extending in the axial direction. The spline may further comprise a plurality of protrusions formed on an outer periphery of the second brake disc portion.

Alternatively, the plurality of protrusions may be formed along the inner periphery of the first brake disc portion and the plurality of notches extending in the axial direction may be formed on the outer periphery of the second brake disc portion.

In each of these two configurations, the protrusions may be in engagement with the notches for fixing the first brake disc portion to the second brake disc portion in a configuration in which the first and second brake disc portions rotate concurrently with each other and in which the first and second brake disc portions are linearly movable with respect to each other along the axial direction.

The protrusions and the notches may have one of a rectangular cross-section, a triangular cross-section, or a cross-section, which includes the shape of a semi-circle. The protrusions and notches may in particular be trapezoidal with semicircular sides as defined by international standards for straight cylindrical spline gears.

In an elevator brake according to an exemplary embodiment of the invention, the at least one first plunger and the at least one second plunger of the elevator brake may be movable independently of each other so that a malfunction of one of the plungers does not affect the functionality of the other plunger. This may enhance the reliability and the safety of the elevator brake.

In an elevator brake according to an exemplary embodiment of the invention, the at least one first plunger and the at least one second plunger may be arranged on a first side of the brake disc, and the at least one stationary braking element may be arranged on an opposite second side of the brake disc so that the brake disc is arranged between the two plungers on one side and the stationary braking element on the other side of the brake disc. Such a configuration allows the two plungers to concurrently urge the brake disc against the stationary braking element for braking rotation of the brake disc.

In the following, exemplary embodiments of the invention are described in more detail with respect to the enclosed figures:
Figure 1 depicts a schematic view of an elevator system according to an exemplary embodiment of the invention.
Figure 2 depicts a schematic view of an elevator brake according to an exemplary embodiment of the invention.
Figure 3 shows an explosive view of the brake disc according to an exemplary embodiment of the invention.
Figure 4A depicts a schematic view of an elevator brake according to another exemplary embodiment of the invention.
Figure 4B depicts a schematic view of an elevator brake according to yet another exemplary embodiment of the invention.
Figure 5 depicts a sectional view through the brake disc of the elevator brake shown in Figure 4A.
Figure 6 depicts an explosive view of the brake disc shown in Figure 5.
Figure 7 depicts a front view of the brake disc shown in Figures 5 and 6.

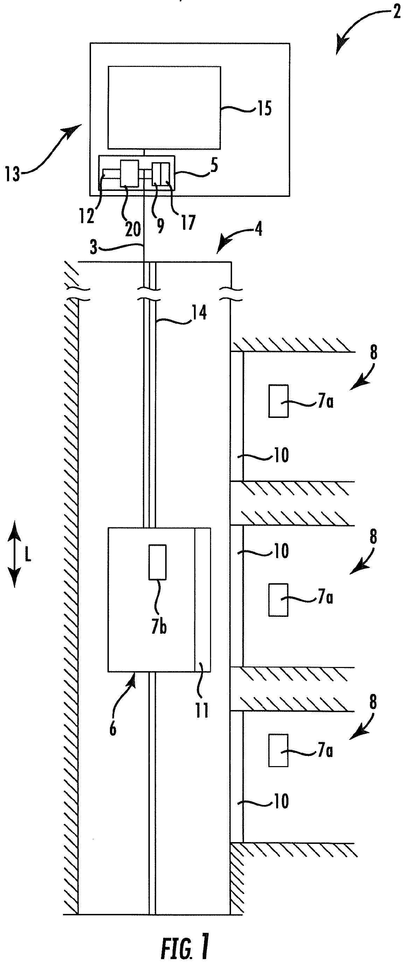

Figure 1 schematically depicts an elevator system 2 according to an exemplary embodiment of the invention.

The elevator system 2 comprises a hoistway 4 extending in a longitudinal direction L between a plurality of landings 8 located on different floors. The elevator system 2 includes an elevator car 6 arranged within the hoistway 4 for being moved along the longitudinal direction L between the plurality of landings 8. The elevator car 6 may in particular be movable along at least one elevator car guide member 14, such as at least one elevator car guide rail, provided within the hoistway 4 and extending along the longitudinal direction L.

The longitudinal direction L may be oriented in a vertical direction, as it is depicted in Figure 1. In an alternative embodiment not depicted in the figures the longitudinal direction L may be inclined with respect to the vertical direction.

Although only a single elevator car guide member 14 is visible in Figure 1, the elevator system 2 may comprise a plurality of elevator car guide members 14.

Although only a single elevator car 6 is depicted in Figure 1, exemplary embodiments of the invention may include elevator systems 2 comprising a plurality of elevator cars 6 moving in one or more hoistways 4.

The elevator car 6 is movably suspended by means of a tension member 3.

The tension member 3, for example a rope or belt, is coupled to an elevator drive system 5. The elevator drive system 5 comprises a motor 9 for rotatably driving a shaft 12, and a drive 17 that harnesses and controls the electrical energy supplied to the motor 9. The elevator drive system 5 is configured for driving the tension member 3, which is coupled to the shaft 12, in order to move the elevator car 6 within the hoistway 4 along the longitudinal direction L between the plurality of landings 8.

The elevator drive system 5 is further provided with at least one elevator brake 20 for braking rotation of the shaft 12 in order to allow stopping movement of the elevator car 6.

The elevator system 2 may further include an elevator counterweight, which is not depicted in Figure 1. The elevator counterweight may be attached to the tension member 3 opposite to the elevator car 6 and configured for moving concurrently and in opposite direction with respect to the elevator car 6 along at least one elevator counterweight guide member, which is also not shown in Figure 1.

Exemplary embodiments of the invention may be employed in elevator systems 2 comprising a counterweight and in elevator systems 2 that do not comprise an elevator counterweight.

The tension member 3 may be a rope, e.g. a steel cord, or a belt. The tension member 3 may be uncoated. Alternatively, the tension member 3 may be coated with a coating, e.g. with a coating having the form of a polymer jacket. In a particular embodiment, the tension member 3 may be a belt comprising a plurality polymer coated steel cords (not shown). The elevator system 2 may have a traction drive including a traction sheave for driving the tension member 3.

The exemplary embodiment shown in Figure 1 uses a 1:1 roping for suspending the elevator car 6. The skilled person easily understands that the type of the roping is not essential for the invention and that different kinds of roping, e.g. a 2:1 roping or a 4:1 roping may be used as well.

A landing door 10 is provided at each of the landings 8. The elevator car 6 is provided with a corresponding elevator car door 11 for allowing passengers to transfer between a landing 8 and the interior of the elevator car 6, when the elevator car 6 is positioned at the respective landing 8.

For moving the elevator car 6 along the hoistway 4 between the different landings 8, the elevator drive system 5 may be controlled by a controller 15 of the elevator system 2.

The elevator system 2 may comprise a machine room 13 housing the elevator drive system 5 and the controller 15. Alternatively, the elevator system 2 may be a machine room-less elevator system 2.

Input to the controller 15 may be provided via landing control panels 7a provided on every landing 8, in particular in the vicinity of the landing doors 10, and/or via an elevator car control panel 7b provided inside the elevator car 6.

The landing control panels 7a may comprise elevator hall call buttons and/or destination call buttons. Destination call buttons allow passengers to enter their respective destinations before entering the elevator car 6. In case the landing control panels 7a are equipped with destination call buttons, no elevator car control panel 7b needs to be provided inside the elevator car 6 since the elevator system 2 is fully controlled by the commands input via the landing control panels 7a.

The landing control panels 7a and the elevator car control panel 7b may be connected to the controller 15 by means of electrical wiring not shown in Figure 1, in particular by an electric bus, or by wireless data connections.

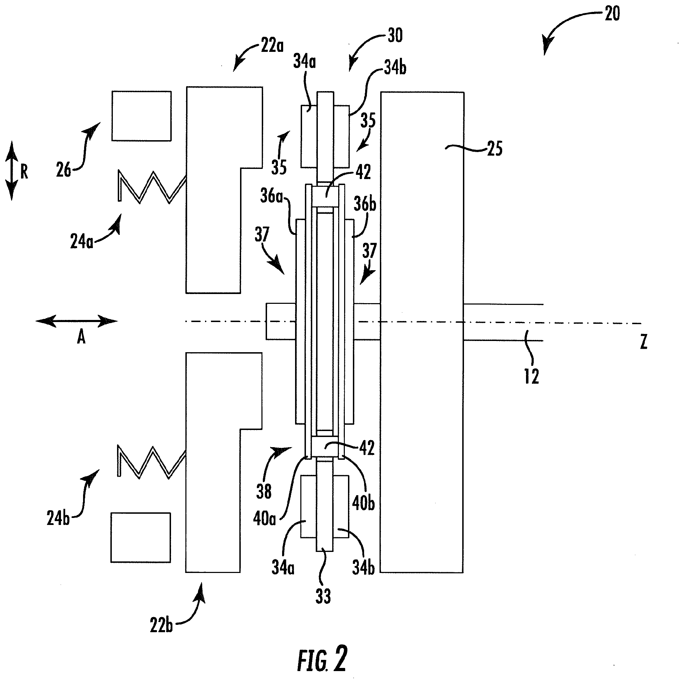

Figure 2 depicts a schematic view of an elevator brake 20 according to an exemplary embodiment of the invention that is configured for braking a shaft 12 extending along a central axis Z in an axial direction A.

The elevator brake 20 comprises an elevator brake disc assembly 30 including a brake disc 33 mounted to the shaft 12 for rotating concurrently with the shaft 12.

The brake disc 33 may in particular be mounted to the shaft 12 by a spline (not shown in Figure 2) that allows the brake disc 33 to linearly move along the shaft 12 in the axial direction A.

The elevator brake disc assembly 30 comprises a first brake portion 35 and a second brake portion 37. The first brake portion 35 is arranged outside the second brake portion 37 along the radial direction R of the brake disc 33 that is oriented perpendicularly to the axial direction A.

In consequence, in the embodiment depicted in Figure 2, the first brake portion 35 may be denoted as outer brake portion, and the second brake portion 37 may be denoted as inner brake portion.

The second brake portion 37 is in particular provided as a second or outer brake portion ring extending around the shaft 12, and the first brake portions 35 is in particular provided as a first or inner brake portion ring extending around the shaft 12 and surrounding the second or inner brake portion ring.

A first outer brake lining 34a is applied to the first brake portion 35 on a first side of the brake disc 33 and a second outer brake lining 34b is applied to the first brake portion 35 on an opposing second side of the brake disc 33.

A first inner brake lining 36a is applied to the second brake portion 37 on a first side of the brake disc 33 and a second inner brake lining 36b is applied to the second brake portion 37 on an opposing second side of the brake disc 33.

The elevator brake 20 further comprises at least one stationary braking element 25 extending parallel to the brake disc 33 in the radial direction R and configured for not rotating together with the shaft 12.

The elevator brake 20 also comprises a first plunger 22a that is movable along the axial direction A, and a first spring 24a. The first spring 24a is configured for urging the first plunger 22a against the brake disc assembly 30 for frictionally engaging with the first brake portion 35 and for urging the brake disc assembly 30 towards the stationary braking element 25 into an engaged position of the elevator brake 20.

The elevator brake 20 also comprises a second plunger 22b that is movable along the axial direction A, and a second spring 24b. The second spring 24b is configured for urging the second plunger 22b against the brake disc assembly 30 for frictionally engaging with the second brake portion 37 and for urging the brake disc assembly 30 towards the stationary braking element 25 into the engaged position of the elevator brake 20.

For releasing the elevator brake 20, the first and second plungers 22a, 22b may be released from the brake disc assembly 30 by activating at least one solenoid 26, which is configured for attracting and moving the first and second plungers 22a, 22b in the axial direction A against the elastic forces applied by the first and second springs 24a, 24b away from the brake disc assembly 30.

In the embodiment depicted in Figure 2, the elevator brake 20 comprises a single solenoid 26 that is configured for moving both, the first and second plungers 22a, 22b. In an alternative configuration, at least two separate solenoids 26 may be provided for moving the first and second plungers 22a, 22b, respectively.

The plungers 22a, 22b, the springs 24a, 24b and the solenoid 26 are arranged on a first side of the brake disc assembly 30, and the stationary braking element 25 is arranged on an opposite second side of the brake brake disc assembly 30.

The first brake portion 35 is formed integrally with or firmly fitted to the brake disc 33 in a configuration in which it is not movable with respect to the brake disc 33.

The second brake portion 37 is mounted to the brake disc 33 in a configuration in which it is movable with respect to the brake disc 33, allowing the second brake portion 37 to float over a predefined distance along the axial direction A.

The elevator brake disc assembly 30 comprises in particular a carrier 38 that supports the at least one second brake portion 37 and that is movable along the axial direction A with respect to the brake disc 33.

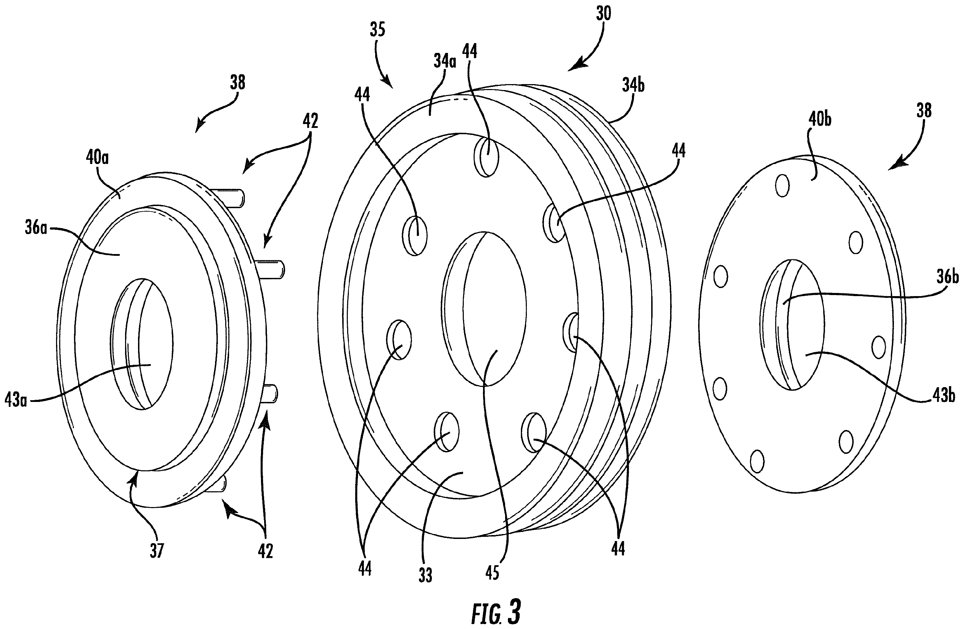

Figure 3 shows an explosive view of the brake disc assembly 30 including the brake disc 33 and the carrier 38.

The carrier 38 includes a first support plate 40a arranged on a first side of the brake disc 33 and supporting a first brake lining 36a of the second brake portion 37. The carrier 38 further comprises second support plate 40b arranged on an opposite second side of the brake disc 33 and supporting a second brake lining 36b of the second brake portion 37.

In the embodiment depicted in Figure 3, the first and second support plates 40a, 40b are provided as circular rings surrounding the shaft 12, which is not shown in Figure 3.

Central openings 43a, 43b, 45 are formed in each of the first and second support plates 40a, 40b and in the brake disc 33, respectively, allowing the shaft 12 to pass through.

The carrier 38 further comprises a plurality of connectors 42 coupling the first support plate 40a and second support plate 40b with each other. When the carrier 38 is mounted to the brake disc 33, the plurality of connectors 42 extend through a plurality of connector openings 44 formed within the brake disc 33.

In the embodiment depicted in Figure 3, the connector openings 44 have a circular cross-section, and the connectors 42 are provided as cylindrical bolts extending in the axial direction A. The shape of the connectors 42 is, however, not restricted to cylindrical bolts. The connectors 42 may have other shapes as well.

The diameters of the connectors 42 and the connector openings 44 are set so that the connectors 42 are movable along the axial direction A within the connector openings 44, allowing the carrier 38 to move along the axial direction A with respect to the brake disc 33.

The brake disc 33 may, for example, have a diameter in the range of 160 mm to 200 mm, in particular a diameter of 180 mm.

The first and second support plates 40a, 40b may, for example, have diameters in the range of 140 mm to 180 mm, in particular a diameter of 160 mm.

Each of the connectors 42 may have a length of 4 mm to 8 mm, in particular a length of 6 mm. Each of the connectors 42 may have a diameter of 3 mm to 5 mm, in particular a length of 4 mm.

Each of the connector openings 44 may have a diameter of 4 mm to 6 mm, in particular a length of 5 mm.

It is understood that these dimensions are provided as examples only. They may vary in particular depending on the maximum load for which the elevator brake 20 is designed.

In case of a malfunction of one of the plungers 22a, 22b causing a defective plunger 22a, 22b not to move completely back into its released position, in which it does not engage with the corresponding brake portion 35, only one of the first and second brake portions 35, 37 remains in engagement with the defective plunger 22a, 22b and/or with the stationary braking element 25, resulting in wear of the respective brake portion 35, 37 caused by rotation of the brake disc 33 with respect to the defective plunger 22a, 22b and with respect to the stationary braking element 25.

The other one of the first and second brake portions 35, 37 that is not associated with the defective plunger 22a, 22b is able to float along the axial direction A. The other brake portion 35, 37 may, in particular, move out of contact with the stationary braking element 25 and the corresponding plunger 22a, 22b.

As a result, in case of a malfunction of one of the plungers 22a, 22b only one of the first and second brake portions 35, 37, namely the brake portion 35, 37 associated with the defective plunger 22a, 22b and the corresponding brake linings 34a, 34b, 36a, 36b, are damaged and/or worn down, whereas the other one of the first and second brake portions 35, 37 and the corresponding brake linings 34a, 34b, 36a, 36b remain intact.

In consequence, the reliability of the elevator brake 20 may be increased, and the safety of the elevator system 2 may be enhanced. It may in particular prevented that both plungers 22a, 22b are damaged due to a malfunction of one of the plungers 22a, 22b. Further, only the brake linings 34a, 34b, 36a, 36b applied to one of the first and second brake portions 35, 37 need to be replaced after a malfunction of one of the plungers 22a, 22b, whereas the brake linings 34a, 34b, 36a, 36b provided on the other one of the first and second brake portions 35, 37 remain intact and do not need to be replaced.

In the embodiment depicted in Figures 2 and 3, the brake linings 34a, 34b, 36a, 36b are applied to the brake portions 35, 37 of the brake disc 33. In an alternative embodiment, which is not explicitly depicted in the figures, the brake linings 34a, 34b, 36a, 36b may be applied to the engagement portions of the plungers 22a, 22b and/or to engagement portions of the stationary braking element 25 facing the brake portions 35, 37 of the brake disc 33.

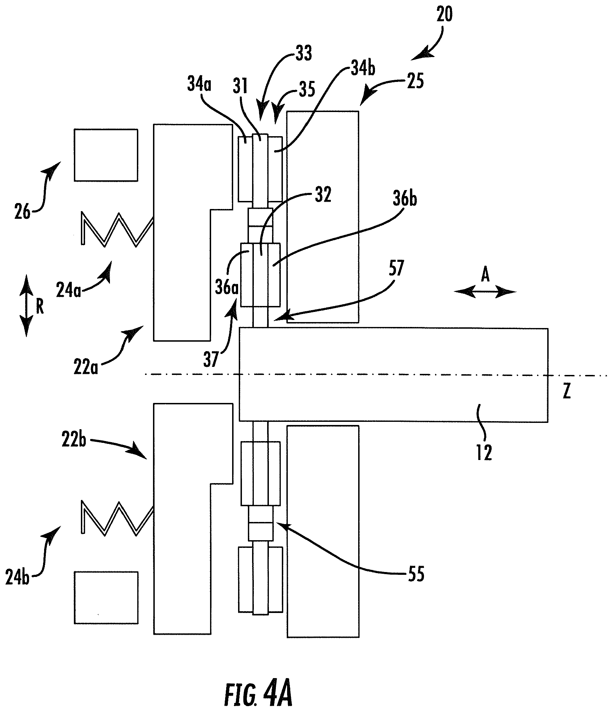

Figure 4A depicts a schematic view of an elevator brake 20 according to another exemplary embodiment of the invention.

The features of the elevator brake 20 depicted in Figure 4A that are identical with the features of the elevator brake 20 depicted in Figure 2 are denoted with the same reference signs, and they are not discussed in detail again. The above description of the elevator brake 20 depicted in Figure 2 correspondingly applies to the features of the elevator brake 20 depicted in Figure 4A except for the differences, which are discussed in the following.

In the embodiment of an elevator brake 20 depicted in Figure 4A, the brake disc 33 comprises two brake disc portions 31, 32, in particular two brake disc portion rings arranged coaxially with each other around the shaft 12.

The two brake disc portions 31, 32 include an outer first brake disc portion 31 and an inner second brake disc portion 32. The second brake disc portion 32 is arranged within the first brake disc portion 31 along the radial direction R.

The first brake portion 35 is provided or supported by the first brake disc portion 31, and the second brake portion 37 is provided or supported bythe second brake disc portion 32, respectively.

A first outer brake lining 34a is applied to the first brake portion 35 on a first side of the first brake disc portion 31 and a second outer brake lining 34b is applied to the first brake portion 35 on an opposing second side of the first brake disc portion 31. A first inner brake lining 36a is applied to the second brake portion 37 on a first side of the second brake disc portion 32 and a second inner brake lining 36b is applied to the second brake portion 37 on an opposing second side of the second brake disc portion 32.

The first brake disc portion 31 is coupled to second brake disc portion 32 by a first spline 55, causing the first and second brake disc portions 31, 32 to rotate concurrently with each other around the central axis Z extending in the axial direction A and allowing the first brake disc portion 31 to move linearly with respect to the second brake disc portion 32 in the axial direction A.

The second brake disc portion 32 is coupled to the shaft 12 by a second spline 57, causing the second brake disc portion 32 to rotate concurrently with the shaft 12 and allowing the second brake disc portion 32 to move linearly along the shaft 12 in the axial direction A.

In consequence, the first and second brake portions 35, 37 provided or supported by the first and second brake disc portions 31, 32 are capable to float with respect to each other along the axial direction A.

Thus similar to the embodiment depicted in Figure 2, in case of a malfunction of one of the plungers 22a, 22b causing a defective plunger 22a, 22b not to move completely back into its released position in which it does not engage with the corresponding brake portion 35, 37, the capability of the first and second brake portions 35, 37 to float with respect to each other allows the brake portion 35, 37 that is not associated with the defective plunger 22a, 22b to move out of engagement with the stationary braking element 25 and the non-defective one of the plungers 22a, 22b.

In consequence, only the at least one one brake portion 35, 37 that is associated with the defective plunger 22a, 22b remains in engagement with the defective plunger 22a, 22b and/or with the stationary braking element 25.

As a result, the risk that both brake portions 35, 37 are damaged or destroyed in case one of the plungers 22a, 22b fails to move back into its released position is considerably reduced. Instead, only the brake linings 34a, 34b, 36a, 36b applied to the brake portion 35, 37 associated with the defective plunger 22a, 22b may be worn down due to the rotation of the brake disc 33 with respect to the defective plunger 22a, 22b and with respect to the stationary braking element 25, but the other brake linings 34a, 34b, 36a, 36b, which are not associated with the defective plunger 22a, 22b, are not affected by the malfunction.

In the embodiment depicted in Figure 4A, the brake linings 34a, 34b, 36a, 36b are attached to the brake portions 35, 37 of the brake disc 33.

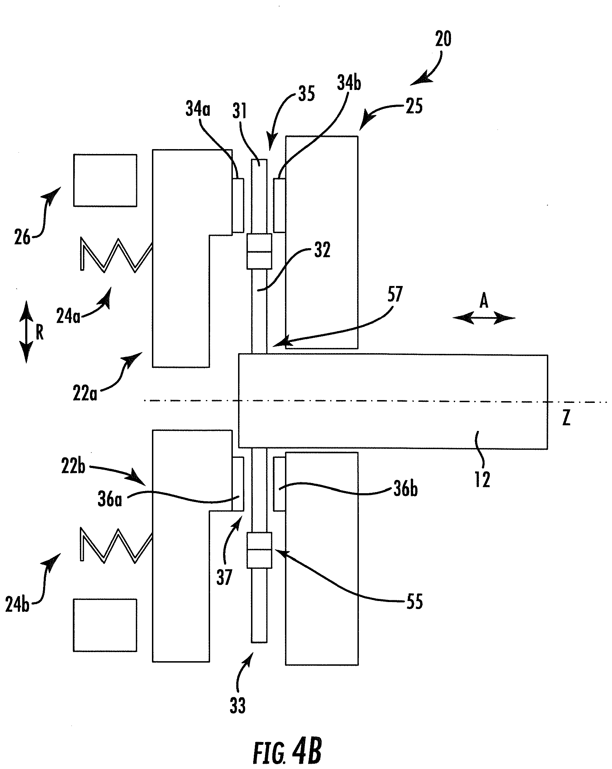

In an alternative embodiment depicted in Figure 4B, the brake linings 34a, 34b, 36a, 36b may be attached to the engagement portions of the plungers 22a, 22b and/or to the engagement portions of the stationary braking element 25 facing the brake portions 35, 37 of the brake disc 33.

The other features of the elevator brake 20 depicted in Figure 4B are identical with the features of the elevator brake 20 depicted in Figure 4A. They are denoted with the same reference signs, and not discussed in detail again. The above description of the elevator brake 20 depicted in Figure 4A correspondingly applies to the features of the elevator brake 20 depicted in Figure 4B except for the different positions of the brake linings 34a, 34b, 36a, 36b mentioned before.

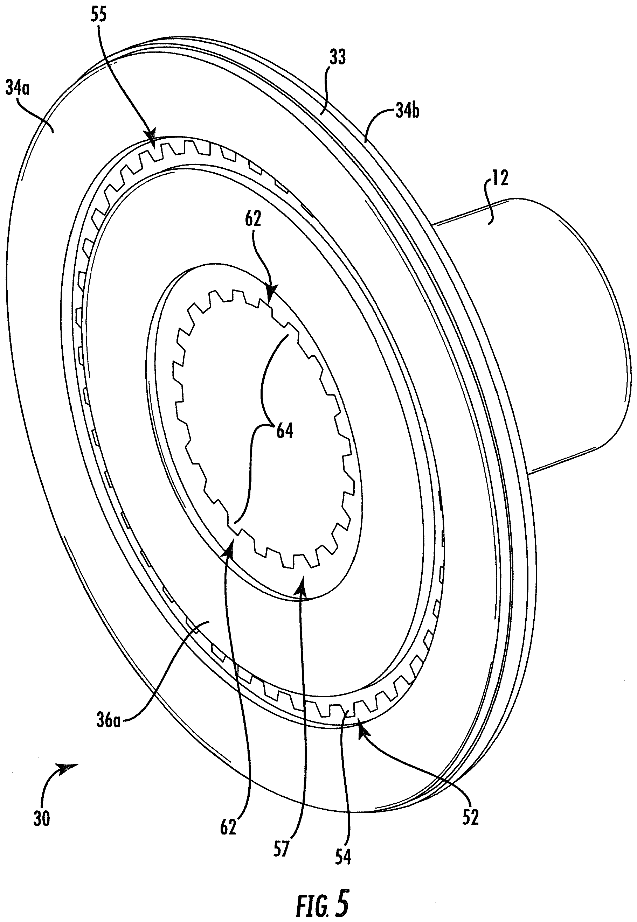

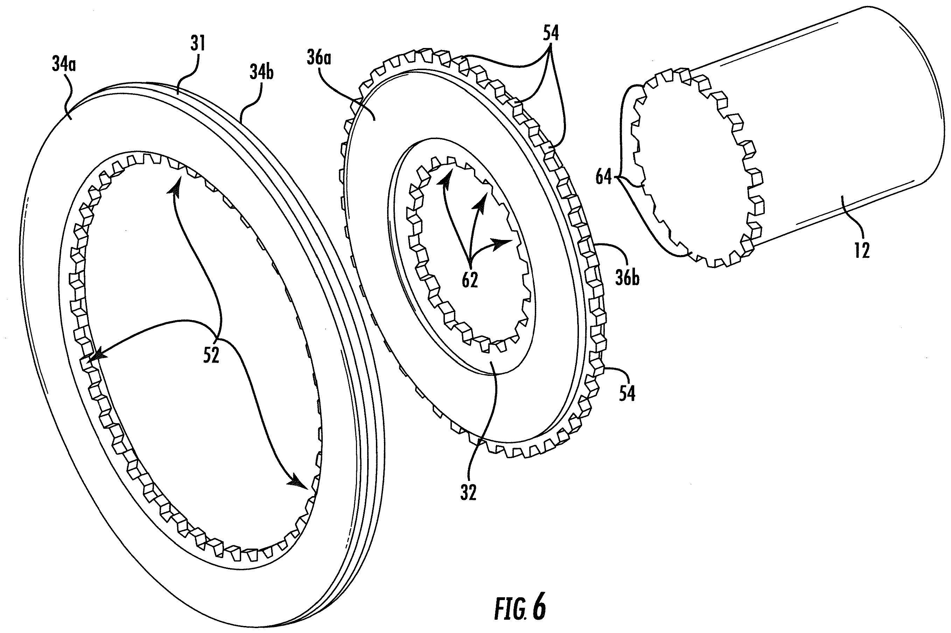

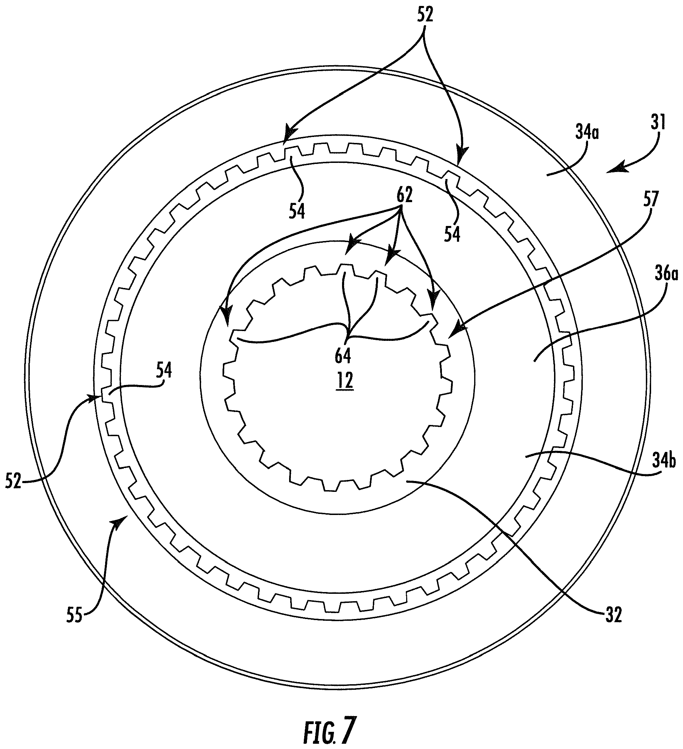

Figure 5 depicts a perspective view of the brake disc 33 of the elevator brake 20 shown in Figure 4A. Figure 6 depicts an explosive view of the brake disc 33 shown in Figure 5, and Figure 7 depicts a front view of the brake disc 33 shown in Figures 5 and 6.

Figures 5 to 7 in particular illustrate the first spline 55 coupling the first and second brake disc portions 31, 32 of the brake disc 33 with each other, and the second spline 57 coupling the second brake disc portions 32 to the shaft 12.

The first spline 55 comprises a plurality of notches 52 extending in the axial direction A, and a plurality of protrusions 54. The notches 52 are formed along the inner periphery of the first brake disc portion 31. The plurality of protrusions 54 are formed on the outer periphery of the second brake disc portion 32.

For clarity of illustration, only some of the notches 52 and some of the protrusions 54 are denoted with reference signs in Figures 5 to 7.

The protrusions 54 are in engagement with the notches 52 for attaching the first brake disc portion 31 to the second brake disc portion 32 in a configuration in which the first and second brake disc portions 31, 32 rotate concurrently with each other and in which the first and second brake disc portions 31, 32 are movable with respect to each other along the axial direction A.

In an alternative embodiment, which is not explicitly shown in the figures, the plurality of protrusions 54 are formed along the inner periphery of the first brake disc portion 31 and the plurality of notches 52 extending in the axial direction are formed on the outer periphery of the second brake disc portion 32.

The second spline 57 comprises a plurality of notches 62 extending in the axial direction A, which are formed along the inner periphery of the second brake disc portion 32, and a plurality of protrusions 64 that are formed on the outer periphery of the shaft 12.

For clarity of illustration, only some of the notches 62 and some of the protrusions 64 are denoted with reference signs in Figure 5 to 7.

The protrusions 64 are in engagement with the notches 62 for attaching the second brake disc portion 32 to the shaft 12 in a configuration in which the second brake disc portion 32 rotates concurrently with the shaft 12 and in which the second brake disc portions 32 is movable with respect to the shaft 12 along the axial direction A.

In an alternative embodiment, which is not explicitly shown in the figures, the plurality of protrusions 54 are formed along the inner periphery of the first brake disc portion 31 and the plurality of notches 52 extending in the axial direction are formed on the outer periphery of the second brake disc portion 32.

The notches 52, 62 and the protrusions 54, 64 have a trapezoidal shape with semicircular sides as defined by international standards for straight cylindrical spline gears. In alternative embodiments, which are not shown explicitly in the figures, the notches 52, 62 and the protrusions 54, 64 may have rectangular, trapezoidal or triangular cross-sections or cross-sections having a round shape, for example the shape of a semi-circle.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention shall not be limited to the particular embodiment disclosed, but that the invention includes all embodiments falling within the scope of the dependent claims.

### References

- 2: elevator system
- 3: tension member
- 4: hoistway
- 5: drive system
- 6: elevator car
- 7a: landing control panel
- 7b: elevator car control panel
- 8: landing
- 9: motor
- 10: landing door
- 11: elevator car door
- 12: shaft
- 13: machine room
- 14: elevator car guide member
- 15: controller
- 17: drive
- 20: elevator brake
- 22a: first plunger
- 22b: second plunger
- 24a: first spring
- 24b: second spring
- 25: stationary braking element
- 26: solenoid
- 30: disc assembly
- 33: brake disc
- 34a: first brake lining
- 34b: second brake lining
- 35: first brake portion
- 36a: first brake lining
- 36b: second brake lining
- 37: second brake portion
- 38: carrier
- 40a: first support plate
- 40b: second support plate
- 42: connector
- 43a: central opening
- 43b: central opening
- 44: connector opening
- 45: central opening
- 52: notch
- 54: protrusion
- 55: first spline
- 57: second spline
- 62: notch
- 64: protrusion

## Claims

1. Elevator brake disc assembly (30) for braking rotation of a shaft (12) within an elevator brake (20), the shaft (12) extending in an axial direction (A) and being rotatable around an axis of rotation, the elevator brake disc assembly (30) comprising:
a brake disc (33) mounted to the shaft (12) for rotating concurrently with the shaft (12);
at least one first brake portion (35) firmly fitted to or formed integrally with the brake disc (33); and
at least one second brake portion (37) attached to the brake disc (33) in a configuration in which the at least one second brake portion (37) rotates concurrently with the brake disc (33) and in which it is movable with respect to the brake disc (33) along the axial direction (A).

2. Elevator brake disc assembly (30) according to claim 1,
comprising a first brake lining (34a) applied to the at least one first brake portion (35) on a first side of the brake disc (33) and a second brake lining (34b) applied to the at least one first brake portion (35) on an opposing second side of the brake disc (33); and/or
comprising a first brake lining (36a) applied to the at least one second brake portion (37) on a first side of the brake disc (33) and a second brake lining (36b) applied to the at least one second brake portion (37) on an opposing second side of the brake disc (33).

3. Elevator brake disc assembly (30) according to any of the preceding claims,
wherein the first brake portion (35) is provided as at least one first brake lining ring;
wherein the second brake portion (37) is provided as at least one second brake lining ring; and
wherein the at least one first brake lining ring and the at least one second brake lining ring are arranged coaxially within each other with the shaft (12) extending through the common center of the at least one first brake lining ring and the at least one second brake lining ring,
wherein the at least one first brake lining ring is in particular arranged outside the at least one second brake lining ring along a radial direction (R).

4. Elevator brake disc assembly (30) according to any of the preceding claims,
wherein the at least one second brake portion (37) is provided on or supported by a carrier (38), and wherein at least a portion of the carrier (38) including the at least one second brake portion (37) is movable along the axial direction (A) with respect to the brake disc (33).

5. Elevator brake disc assembly (30) according to claim 4, wherein the carrier (38) comprises:
a first support plate (40a) arranged on a first side of the brake disc (33) and providing or supporting a first part of the second brake portion (37);
a second support plate (40b) arranged on an opposite second side of the brake disc (33) and providing or supporting a second part of the second brake portion (37); and
a plurality of connectors (42) extending through a plurality of connector openings (44) formed within the brake disc (33) and coupling the first support plate (40a) and second support plate (40b) with each other.

6. Elevator brake disc assembly (30) according to claim 5, wherein the connector openings (44) and the connectors (42) are arranged around the axial direction (A); wherein the connector openings (44) and the connectors (42) are in particular arranged along a circle with the shaft (12) extending through the center of the circle.

7. Elevator brake disc assembly (30) according to any of claims 1 to 3, wherein the brake disc (33) comprises
a first brake disc portion (31) providing or supporting the first brake portion (35); and
a second brake disc portion (32) providing or supporting the second brake portion (37);
wherein the first brake disc portion (31) and the second brake disc portion (32) are movable with respect to each other along the axial direction (A).

8. Elevator brake disc assembly (30) according to claim 7, wherein
the first brake disc portion (31) is provided as a first brake disc portion ring, and
the second brake disc portion (32) is provided as a second brake disc portion ring;
wherein the first and second brake disc portions (31, 32) are arranged coaxially with each other with the first brake disc portion (31) surrounding the second brake disc portion (32),
wherein the first brake disc portion (31) is in particular coupled to the second brake disc portion (32) by a spline (55).

9. Elevator brake disc assembly (30) according to claim 8,
wherein a plurality of notches (52) extending in the axial direction (A) are formed along the inner periphery of the first brake disc portion (31), and wherein a plurality of protrusions (54) are formed on the outer periphery of the second brake disc portion (32); or
wherein a plurality of protrusions (54) are formed along the inner periphery of the first brake disc portion (31), and wherein a plurality of notches (52) extending in the axial direction (A) are formed on the outer periphery of the second brake disc portion (32);
wherein the protrusions (54) are in engagement with the notches (52) for fixing the first brake disc portion (31) to the second brake disc portion (32) in a configuration in which the first and second brake disc portions (31, 32) rotate concurrently with each other and in which they are movable with respect to each other along the axial direction (A);
wherein the notches (52) and the protrusions (54) have in particular a rectangular cross-section, or a triangular cross-section, or a cross-section including the shape of a semi-circle.

10. Elevator brake (20) for braking rotation of a shaft (12) of an elevator drive system (5), the elevator brake (20) comprising
at least one elevator brake disc assembly (30) according to any of the preceding claims, wherein the elevator brake disc (33) of the at least one elevator brake disc assembly (30) is mounted to the shaft (12) for rotating concurrently with the shaft (12);
at least one stationary braking element (25) configured for not rotating concurrently with the shaft (12);
at least one first plunger (22a) that is movable along the axial direction (A) for frictionally engaging with the first brake portion (35) of the brake disc (33) of the at least one elevator brake disc assembly (30) for urging the brake disc (33) towards the stationary braking element (25) into an engaged position of the elevator brake (20); and
at least one second plunger (22b) that is movable along the axial direction (A) for frictionally engaging with the second brake portion (37) of the brake disc (33) of the at least one elevator brake disc assembly (30) for urging the brake disc (33) towards the stationary braking element (25) into an engaged position of the elevator brake (20);
wherein the at least one first plunger (22a) and the at least one second plunger (22b) are in particular movable independently of each other.

11. Elevator brake (20) according to claim 10, wherein a brake lining (34a, 36a) is applied to an engagement portion of at least one of the first and second plungers (22a, 22b) facing the brake disc (33).

12. Elevator brake (20) according to claim 10 or 11, wherein the
the at least one first plunger (22a) and the at least one second plunger (22b) are arranged on a first side of the brake disc (33), and wherein the at least one stationary braking element (25) is arranged on an opposite second side of the brake disc (33).

13. Elevator drive system (5) comprising a shaft (12), a motor configured for rotating the shaft (12), and an elevator brake (20) according to claim 11 or 12 that is configured for braking rotation of the shaft (12).

14. Elevator system (2) comprising:
an elevator car (6) that is movable in a hoistway (4) between a plurality of landings (8); and
an elevator drive system (5) according to claim 14 that is configured for moving the elevator car (6) along the hoistway (4).

15. Method of braking a shaft (12) in an elevator system (2) with an elevator brake (20) according to claim 11 or 12, wherein the method includes:
urging the first plunger (22a) against the first brake portion (35) of the brake disc (33) of the at least one elevator brake disc assembly (30) for urging the brake disc (33) towards the stationary braking element (25) into an engaged position of the elevator brake (20); and/or
urging the second plunger (22b) against the second brake portion (37) of the brake disc (33) of the at least one elevator brake disc assembly (30) for urging the brake disc (33) towards the stationary braking element (25) into an engaged position of the elevator brake (20).
